# EUROPEAN PATENT APPLICATION

(11) **EP 4 404 220 A1**
(43) Date of publication of application: **24.07.2024**
(21) Application number: 22870141.3
(22) Date of filing: 03.08.2022
(51) Int. Cl.: H01F 7/14, H01F 7/126, H01F 7/02, H01F 7/122, B23B 31/28, B23Q 3/154

(54) **MAGNETIC FORCE CONTROL DEVICE AND MAGNETIC BODY HOLDING DEVICE USING SAME**

(30) Priority: 14.09.2021 KR 20210122520
(71) Applicant: Choi, Tae Kwang, Gwangmyeong-si, Gyeonggi-do 14330 (KR)
(72) Inventor: Choi, Tae Kwang, Gwangmyeong-si, Gyeonggi-do 14330 (KR)
(74) Representative: Fabry, Bernd
(86) International application number: PCT/KR2022/011457
(87) International publication number: WO 2023/043054

(57) **Abstract**

Disclosed are a magnetic force control device for controlling a magnetic force on an interaction surface by controlling an arrangement state of a freely rotating permanent magnet by means of a coil, and a magnetic body holding device using the same. The magnetic force control device includes a first pole piece having a first interaction surface, a second pole piece having a second interaction surface, a stationary magnet fixed between the first pole piece and the second pole piece, a rotary magnet provided between the first pole piece and the second pole piece and configured to be rotatable to define a first arrangement state in which an S-pole of the rotary magnet is magnetically connected to the second pole piece and an N-pole of the rotary magnet is magnetically connected to the first pole piece, and a second arrangement state in which the N-pole of the rotary magnet is magnetically connected to the second pole piece and the S-pole of the rotary magnet is magnetically connected to the first pole piece, and a coil wound around at least one of the first pole piece and the second pole piece, wherein a rotation axis of the rotary magnet extends in a direction toward the stationary magnet, and wherein the first arrangement state and the second arrangement state are switched by rotating the rotary magnet by controlling a current applied to the coil, such that magnetic forces on the first and second interaction surfaces of the first and second pole pieces are controlled.

## Description

### Technical Field

The present invention relates to a magnetic force control device and a magnetic body holding device using the same, and more particularly, to a magnetic force control device configured to control a magnetic force on an interaction surface by controlling an arrangement state of a freely rotating permanent magnet by means of a coil, and a magnetic body holding device using the same.

### Background Art

A magnetic body holding device, such as a permanent magnet workpiece holding device, is a device used to attach, by using a magnetic force, an attachment object made of a magnetic material such as iron. Recently, the magnetic body holding device has been widely used as an internal device and the like attached to a mold clamp for an injection machine, a mold clamp for a press device, a chuck for a machine tool, or the like.

Basically, the magnetic body holding device is configured to attach the attachment object, which is a magnetic body, to an interaction surface by using a high magnetic force of a permanent magnet. In order to release the attachment object, a magnetic flow from the permanent magnet is controlled such that the magnetic flow is prevented from being formed on the interaction surface, thereby separating the attachment object from the interaction surface.

The present applicant has proposed a permanent magnet workpiece holding device configured to hold and release an object by changing a magnetic circuit by rotating a permanent magnet (see Patent Document 1). However, in the case of the permanent magnet workpiece holding device, because a motor rotates the permanent magnet, a large amount of force needs to be applied to the motor. As a result, usability of the permanent magnet workpiece holding device is not good, and the permanent magnet workpiece holding device does not come into practical use because a large amount of power is applied to the motor.

### Technical Problem

The present invention has been made in an effort to solve the above-mentioned problem, and an object of the present invention is to provide a magnetic force control device configured to control a magnetic force on an interaction surface by controlling an arrangement state of a freely rotating permanent magnet by means of a coil, and a magnetic body holding device using the same.

### Technical Solution

In order to achieve the above-mentioned object, a magnetic force control device according to an exemplary embodiment of the present invention includes: a first pole piece having a first interaction surface; a second pole piece having a second interaction surface; a stationary magnet fixed between the first pole piece and the second pole piece; a rotary magnet provided between the first pole piece and the second pole piece and configured to be rotatable to define a first arrangement state in which an S-pole of the rotary magnet is magnetically connected to the second pole piece and an N-pole of the rotary magnet is magnetically connected to the first pole piece, and a second arrangement state in which the N-pole of the rotary magnet is magnetically connected to the second pole piece and the S-pole of the rotary magnet is magnetically connected to the first pole piece; and a coil wound around at least one of the first pole piece and the second pole piece, wherein a rotation axis of the rotary magnet extends in a direction toward the stationary magnet, and wherein the first arrangement state and the second arrangement state are switched by rotating the rotary magnet by controlling a current applied to the coil, such that magnetic forces on the first and second interaction surfaces of the first and second pole pieces are controlled.

The magnetic force control device may include: a shaft disposed between the first pole piece and the second pole piece and configured to rotate together with the rotary magnet.

The magnetic force control device may include: a plurality of diamagnetic bodies coupled to the first pole piece and the second pole piece and configured to support the shaft.

The plurality of diamagnetic bodies may include: a first diamagnetic body supported on the first pole piece and the second pole piece and configured to accommodate one end of the shaft; and a second diamagnetic body disposed below the first diamagnetic body and configured to accommodate the other end of the shaft.

The rotary magnet may be disposed between the plurality of diamagnetic bodies.

The magnetic force control device may include: bearings respectively coupled to the diamagnetic bodies and configured to support a part of the shaft.

The diamagnetic bodies may each include: a shaft groove configured to support a part of the shaft; and a bearing groove disposed at one side and the other side of the shaft groove and configured to support the bearing.

The bearing may include: an outer race supported on one surface of the bearing groove; an inner race disposed to be spaced apart from the outer race and coupled to a part of the shaft; and a plurality of rolling elements disposed between the outer race and the inner race.

A length of the inner race may be longer than a length of the outer race.

The plurality of diamagnetic bodies may be coupled to the first pole piece and the second pole piece and define an accommodation space.

A part of the shaft may be accommodated in the accommodation space in a state in which the shaft is supported on the plurality of diamagnetic bodies.

The rotary magnet may be rotatable in the accommodation space in a state in which the rotary magnet is coupled to the shaft.

The rotary magnet may be rotatable while being in contact with the inner race in a state in which the rotary magnet is coupled to the shaft.

The coil may be disposed between the second diamagnetic body and the stationary magnet.

The rotary magnet and the stationary magnet may be disposed to be spaced apart from each other with the second diamagnetic body interposed therebetween.

The coil may be disposed between the rotary magnet and the stationary magnet.

In addition, a magnetic body holding device according to an exemplary embodiment of the present invention includes the magnetic force control device according to any one of claims 1 to 16.

### Advantageous Effects

According to the present invention, even though a small amount of current is applied, the rotary magnet is rotated, and the magnetic flow is changed, such that holding and releasing are performed, and the magnetic force control device is easily controlled.

In addition, the magnetic force control device according to the present invention requires only a small amount of current when holding or releasing an object, thereby achieving low power consumption.

### Description of Drawings

Figs. 1a to 1d are schematic views illustrating a magnetic force control device according to an exemplary embodiment of the present invention.
Figs. 2a to 2c are cross-sectional views illustrating various exemplary embodiments of upper portions of first and second pole pieces.
Figs. 3a to 3c are cross-sectional views illustrating various exemplary embodiments of lower portions of the first and second pole pieces.

### Modes of the Invention

The exemplary embodiments disclosed in the present specification may be variously modified. Specific exemplary embodiments will be illustrated in the drawings and described in detail in the detailed description. However, the specific exemplary embodiments illustrated in the accompanying drawings are merely intended to facilitate understanding of various exemplary embodiments. Therefore, the technical spirit is not limited by the specific exemplary embodiments illustrated in the accompanying drawings, and the scope of the present invention should be understood as including all equivalents or substitutes included in the spirit and technical scope of the present invention.

The terms including ordinal numbers such as 'first,' 'second,' and the like may be used to describe various constituent elements, but the constituent elements are not limited by the terms. These terms are used only to distinguish one constituent element from another constituent element.

In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof. When one constituent element is described as being "coupled" or "connected" to another constituent element, it should be understood that one constituent element can be coupled or connected directly to another constituent element, and an intervening constituent element can also be present between the constituent elements. On the other hand, when one constituent element is described as being "coupled directly to" or "connected directly to" another constituent element, it should be understood that no intervening constituent element is present between the constituent elements.

Meanwhile, the term "module" or "unit" used for a constituent element used in the present specification performs at least one function or operation. Further, the "module" or "unit" may perform the function or operation by hardware, software, or a combination of hardware and software. In addition, except for the "module" or "unit" that should be performed in specific hardware or performed by at least one processor, a plurality of "modules" or a plurality of "units" may be integrated into at least one module. Singular expressions include plural expressions unless clearly described as having different meanings in the context.

In addition, in the description of the present invention, the specific descriptions of related well-known functions or configurations will be summarized or omitted when it is determined that the specific descriptions may unnecessarily obscure the subject matter of the present invention.

Hereinafter, various exemplary embodiments will be described in more detail with reference to the accompanying drawings.

A magnetic force control device 100 according to the present invention refers to a device which controls to generate or not to generate magnetic force by changing magnetic characteristics on an interaction surface. The magnetic force control device 100 according to the present invention may be comprehensively used for a magnetic body holding device, a power device, and the like. Hereinafter, an example in which the magnetic force control device 100 is used for the magnetic body holding device will be described. However, the application of the magnetic force control device 100 is not limited thereto.

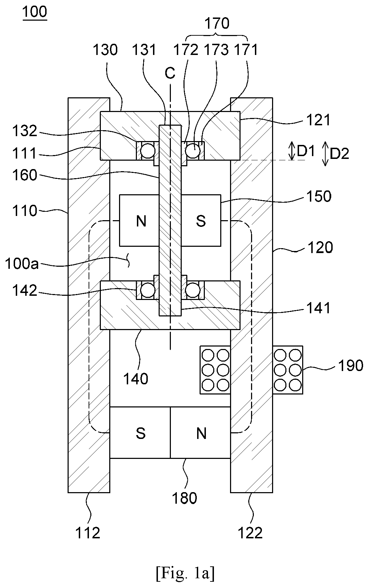

Figs. 1a to 1d are schematic views illustrating a magnetic force control device according to an exemplary embodiment of the present invention.

With reference to figs. 1a to 1d, the magnetic force control device 100 according to the exemplary embodiment of the present invention includes a first pole piece 110, a second pole piece 120, a first diamagnetic body 130, a second diamagnetic body 140, a rotary magnet 150, a shaft 160, bearings 170, a stationary magnet 180, and a coil 190.

The first pole piece 110 is made of a ferromagnetic material such as iron capable of forming a magnetic flow.

The first pole piece 110 includes a first diamagnetic body accommodation groove 111 and a first interaction surface 112.

The first diamagnetic body accommodation groove 111 is provided in an inner surface of the first pole piece 110. The first diamagnetic body accommodation groove 111 accommodates one side of the first diamagnetic body 130 and one side of the second diamagnetic body 140. One side of the first diamagnetic body 130 and one side of the second diamagnetic body 140, which are accommodated in the first diamagnetic body accommodation groove 111, may be fixed to the first pole piece 110.

The first interaction surface 112 may be provided at one outer end of the first pole piece 110 and configured to come into contact with an object 1. When a magnetic flow is formed on the first interaction surface 112, the object 1 having magnetism may be held on the first interaction surface 112.

The second pole piece 120 is made of a ferromagnetic material such as iron capable of forming a magnetic flow. The second pole piece 120 is disposed to be spaced apart from the first pole piece 110 with the stationary magnet 180 interposed therebetween.

The second pole piece 120 includes a second diamagnetic body coupling groove 121 and a second interaction surface 122.
* The second diamagnetic body accommodation groove 121 is provided in an inner surface of the second pole piece 120. The second diamagnetic body accommodation groove 121 accommodates the other side of the first diamagnetic body 130 and the other side of the second diamagnetic body 140. The other side of the first diamagnetic body 130 and the other side of the second diamagnetic body 140, which are accommodated in the second diamagnetic body accommodation groove 121, may be fixed to the second pole piece 120.

The second interaction surface 122 is provided at one outer end of the second pole piece 120 and configured to come into contact with the object 1. When a magnetic flow is formed on the second interaction surface 122, the object 1 having magnetism may be held on the second interaction surface 122. The second interaction surface 122 is disposed in parallel with the first interaction surface 112 in a horizontal direction so as to be stably in contact with the object 1.

The object 1, which is held by being in contact with the first interaction surface 112 and the second interaction surface 122, forms the magnetic flows together with the first pole piece 110 and the second pole piece 120, such that the object 1 being in contact with one surface of the first pole piece 110 and one surface of the second pole piece 120 may be held.

The first diamagnetic body 130 is partially accommodated in the first diamagnetic body accommodation groove 111 and the second diamagnetic body accommodation groove 121, respectively, coupled to the first pole piece 110 and the second pole piece 120, and supported on the first pole piece 110 and the second pole piece 120.

The first diamagnetic body 130 has a repulsive force against a magnetic field formed outside, and does not form the magnetic flow, or blocks the magnetic flow. Therefore, the first diamagnetic body 130 does not interfere with the magnetic flow of the rotary magnet 150.

The first diamagnetic body 130 includes a first shaft groove 131 and a first bearing groove 132.

The first shaft groove 131 is provided in one surface of the first diamagnetic body 130. The first shaft groove 131 may accommodate one side of the shaft 160 and support a part of the shaft 160.

The first bearing groove 132 is provided in one surface of the first diamagnetic body 130 and disposed at one side and the other side of the first shaft groove 131. The first bearing groove 132 accommodates the bearing 170 and supports the bearing 170.

The second diamagnetic body 140 is partially accommodated in the first diamagnetic body accommodation groove 111 and the second diamagnetic body accommodation groove 121, respectively, coupled to the first pole piece 110 and the second pole piece 120, and supported on the first pole piece 110 and the second pole piece 120. The second diamagnetic body 140 is disposed to be spaced apart from the first diamagnetic body 130 with the rotary magnet 150 interposed therebetween.

The second diamagnetic body 140 has a repulsive force against a magnetic field formed outside, and does not form the magnetic flow, or blocks the magnetic flow. Therefore, the second diamagnetic body 140 does not interfere with the magnetic flow of the rotary magnet 150.

The second diamagnetic body 140 includes a second shaft groove 141 and a second bearing groove 142.

The second shaft groove 141 is provided in one surface of the second diamagnetic body 140. The second shaft groove 141 may accommodate the other side of the shaft 160 and support a part of the shaft 160.

The second bearing groove 142 is provided in one surface of the second diamagnetic body 140 and disposed at one side and the other side of the second shaft groove 141. The second bearing groove 142 accommodates the bearing 170 and supports the bearing 170.

The first and second diamagnetic bodies 130 and 140 are provided as a plurality of components configured such that the first diamagnetic body 130 covers an upper side of the rotary magnet 150 and the second diamagnetic body 140 covers a lower side of the rotary magnet 150. The plurality of diamagnetic bodies 130 and 140, together with the plurality of pole pieces 110 and 120, defines an accommodation space 100a. The rotary magnet 150, the shaft 160, and a part of the bearing 170 are accommodated in the accommodation space 100a.

The rotary magnet 150 is disposed between the first pole piece 110 and the second pole piece 120. A rotation axis of the rotary magnet 150 extends in a direction perpendicular to a longitudinal direction of the stationary magnet 180, and the rotary magnet 150 may rotate about the direction perpendicular to the longitudinal direction of the stationary magnet 180. In this case, the longitudinal direction means a direction from an S-pole toward an N-pole of the stationary magnet 180 or a direction from an N-pole toward an S-pole of the stationary magnet 180.

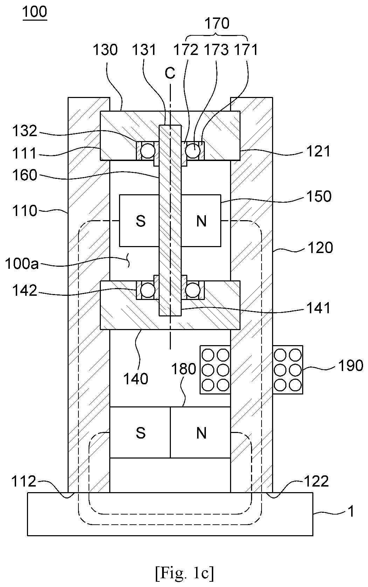

The rotary magnet 150 is disposed to be rotatable between a first arrangement state (see fig. 1a) in which the S-pole of the rotary magnet 150 is adjacent to the first pole piece 110 and magnetically connected to the first pole piece 110 and the N-pole of the rotary magnet 150 is adjacent to the second pole piece 120 and magnetically connected to the second pole piece 120 and a second arrangement state (see fig. 1c) in which the N-pole of the rotary magnet 150 is adjacent to the second pole piece 120 and magnetically connected to the second pole piece 110 and the S-pole of the rotary magnet 150 is adjacent to the first pole piece 110 and magnetically connected to the first pole piece 110.

The configuration in which the rotary magnet 150 is "magnetically connected" to the first pole piece 110 or the second pole piece 120 includes a case in which the rotary magnet 150 is spaced apart from the first pole piece 110 or the second pole piece 120 to the extent that the magnetic flow may be formed on the first pole piece 110 or the second pole piece 120 by the rotary magnet 150 even though the rotary magnet 150 is not physically in direct contact with the first pole piece 110 or the second pole piece 120.

For example, it can be said that the rotary magnet 150 is magnetically connected to the first pole piece 110 or the second pole piece 120 when the magnetic flow having intensity, which is equal to or higher than A% of intensity of the magnetic flow generated when the rotary magnet 150 comes into contact with the first pole piece 110 or the second pole piece 120, is formed on the first pole piece 110 or the second pole piece 120. In this case, A may be 80, 70, 60, 50, 40, 30, 20, or the like.

The rotary magnet 150 is also disposed to be spaced apart from the stationary magnet 180 even in the horizontal direction. Therefore, an overall height of the magnetic force control device 100 may be reduced, the magnetic force control device 100 may be compact, and a high holding force may be maintained.

The rotary magnet 150 is coupled to the shaft 160 and accommodated in the accommodation space 100a. The rotary magnet 150 rotates together with the shaft 160 in the accommodation space 100a. The rotary magnet 150, which is positioned at a portion adjacent to the second pole piece 120 by the direction in which the current flows through the coil 190, may rotate about a center C of the shaft 160 by receiving a repulsive force from the second pole piece 120.

The shaft 160 is disposed between the first pole piece 110 and the second pole piece 120 and partially accommodated in the first shaft groove 131 and the second shaft groove 141, such that the shaft 160 is coupled to the rotary magnet 150. In a state in which a part of the shaft 160 is accommodated and supported in the first shaft groove 131 and the second shaft groove 141, another part of the shaft 160, which is not supported, is accommodated in the accommodation space 100a.

The shaft 160 may support the rotary magnet 150 so that the rotary magnet 150, which is disposed between the first diamagnetic body 130 and the second diamagnetic body 140, is not in contact with the first diamagnetic body 130 or the second diamagnetic body 140.

The bearings 170 are accommodated in the first bearing groove 132 and the second bearing groove 142 and coupled to the first diamagnetic body 130 and the second diamagnetic body 140. The bearings 170 are coupled to the shaft 160 in the state in which the bearings 170 are accommodated in the first bearing groove 132 and the second bearing groove 142. The bearings 170 may support a part of the shaft 160 and assist a rotation of the shaft 160.

The bearing 170 includes an outer race 171, an inner race 172, and a plurality of rolling elements 173.

The outer races 171 are in contact with and fixed to one surface of the first bearing groove 132 and one surface of the second bearing groove 142. The outer race 171 supports a part of each of the plurality of rolling elements 173 so that the plurality of rolling elements 173 is rotatable.

The inner race 172 is spaced apart from the outer race 171 based on the plurality of rolling elements 173. The inner race 172 may rotate relative to the outer race 171. The inner race 172 supports a part of each of the plurality of rolling elements 173 so that the plurality of rolling elements 173 is rotatable. The shaft 160 may be fixed to the inner race 172.

The inner race 172 further protrudes toward the rotary magnet 150 than the outer race 171 and is accommodated in the accommodation space 100a. That is, a length D2 of the inner race 172 in an axial direction of the shaft 160 has a larger value than a length D1 of the outer race 171.

The shaft 160 may sway in the axial direction thereof while the shaft 160 rotates. In this case, the rotary magnet 150 fixed to the shaft 160 may also sway together with the shaft 160 in the axial direction of the shaft 160.

According to the present exemplary embodiment, the inner race 172 of the bearing 170 further protrudes toward the rotary magnet 150 than the outer race 171 of the bearing 170. Therefore, even if one end of the rotary magnet 150 and the bearing 170 come into contact with each other as the rotary magnet 150 repeatedly sways in the axial direction of the shaft 160, one end of the rotary magnet 150 comes into contact with only the inner race 172 of the bearing 170 without coming into contact with the outer race 171 of the bearing 170. In this case, the rotary magnet 150 may rotate together with the inner race 172 in the state in which the rotary magnet 150 is in contact with the inner race 172. Therefore, it is possible to minimize a situation in which the contact between the rotary magnet 150 and the outer race 171 hinders the rotation of the rotary magnet 150 or generates heat or noise while the rotary magnet 150 rotates.

The plurality of rolling elements 173 is disposed between the outer race 171 and the inner race 172. The plurality of rolling elements 173 supports the inner race 172 so that the inner race 172 is rotatable. The plurality of rolling elements 173 rotates in a direction opposite to the direction in which the inner race 172 rotates.

The shaft 160 is accommodated in the first shaft groove 131 and the second shaft groove 141 and coupled to the bearings 170. The shaft 160, which rotates together with the rotary magnet 150, may stably rotate even when the shaft 160 is swayed by an external force.

The stationary magnet 180 may be provided as a permanent magnet and disposed between the first pole piece 110 and the second pole piece 120. The stationary magnet 180 may be fixedly supported by the first pole piece 110 and the second pole piece 120. In addition, the stationary magnet 180 is disposed below the coil 190.

The S-pole of the stationary magnet 180 is disposed to be in contact with the first pole piece 110, and the N-pole of the stationary magnet 180 is disposed to be in contact with the second pole piece 120. The stationary magnet 180 is disposed to be closer to the first interaction surface 112 and the second interaction surface 122 than the rotary magnet 150 to the first interaction surface 112 and the second interaction surface 122.

The stationary magnet 180 is disposed to be spaced apart from the rotary magnet 150 with the second diamagnetic body 140 interposed therebetween. The second diamagnetic body 140 prevents the magnetic force of the stationary magnet 180 from affecting the rotary magnet 150 and prevents the magnetic force of the rotary magnet 150 from affecting the stationary magnet 180. Therefore, it is possible to prevent a path of the magnetic flow from being deformed when the rotary magnet 150 is rotated by a flow of current.

The coil 190 is disposed below the second diamagnetic body 140 and disposed between the rotary magnet 150 and the stationary magnet 180. The coil 190 may be wound around at least one of the first pole piece 110 and the second pole piece 120. Figs. 1a to 1d illustrate the structure in which the coil 190 is wound around the second pole piece 120, but a structure in which the coil 190 is wound around the first pole piece 110 or a structure in which the coil 190 is wound around both the first pole piece 110 and the second pole piece 120 may also be applied.

As illustrated in figs. 1a to 1d, the coil 190 is disposed between the stationary magnet 180 and the second diamagnetic body 140 in the state in which the coil 190 is wound around the second pole piece 120. Although not illustrated, in case that the coil 190 is wound around the first pole piece 110, the coil 190 may be disposed between the stationary magnet 180 and the second diamagnetic body 140 in the state in which the coil 190 is wound around the first pole piece 110.

When the current flows through the coil 190, the magnetic flow is formed in a predetermined direction by Ampere's right-handed screw rule, and the N-pole and the S-pole are formed in the direction of the magnetic flow on the second pole piece 120 around which the coil 190 is wound. That is, it can be seen that the coil 190 and one portion of the second pole piece 120 around which the coil 190 is wound serve as an electromagnet.

The coil 190 is disposed between the second diamagnetic body 140 and the stationary magnet 180. The coil 190 may be protected by the second diamagnetic body 140 even when the rotary magnet 150, the shaft 160, and the bearings 170 are withdrawn.

Hereinafter, a principle of holding the object 1, which is a magnetic body, or releasing the object 1 will be described with reference back to figs. 1a to 1d.

First, with reference to fig. 1a, when no power is applied to the coil 190 and thus no current flows, a portion of the first pole piece 110 being in contact with the S-pole of the stationary magnet 180, that is, the portion of the first pole piece 110, which is adjacent to the S-pole of the stationary magnet 180, is magnetized as the N-pole, and a portion of the first pole piece 110, which is relatively distant from the S-pole of the stationary magnet 180, that is, the portion of the first pole piece 110, which is adjacent to the rotary magnet 150, is magnetized as the S-pole.

On the contrary, a portion of the second pole piece 120 being in contact with the N-pole of the stationary magnet 180, that is, the portion of the second pole piece 120, which is adjacent to the N-pole of the stationary magnet 180, is magnetized as the S-pole, and a portion of the second pole piece 120, which is relatively distant from the N-pole of the stationary magnet 180, that is, the portion of the second pole piece 120, which is adjacent to the rotary magnet 150, is magnetized as the N-pole.

The rotary magnet 150 is disposed in the first arrangement state (see fig. 1a) in which the N-pole of the rotary magnet 150 is adjacent to the first pole piece 110 and magnetically connected to the first pole piece 110 and the S-pole of the rotary magnet 150 is adjacent to the second pole piece 120 and magnetically connected to the second pole piece 120.

When the rotary magnet 150 is disposed in the first arrangement state (see fig. 1a), one magnetic closed loop is formed along the first pole piece 110, the rotary magnet 150, the second pole piece 120, and the stationary magnet 180, as indicated by the dotted line illustrated in fig. 1a.

In the state in which the rotary magnet 150 is disposed in the first arrangement state (see fig. 1a), no magnetic flow is formed in the direction toward the first interaction surface 112 and the second interaction surface 122, and as a result, the object 1 may not be held on the first pole piece 110 and the second pole piece 120.

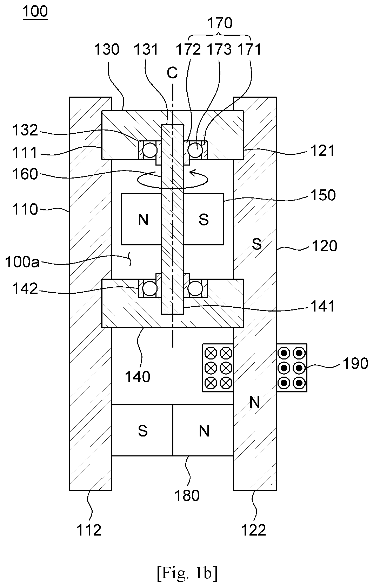

When the coil 190 is controlled so that the current flows through the coil 190 as illustrated in fig. 1b, the N-pole is formed on the portion of the second pole piece 120, which is adjacent to the second interaction surface 122, and the S-pole is formed on the portion of the second pole piece 120 that is adjacent to the rotary magnet 150.

When a sufficient current flows through the coil 190, the rotary magnet 150 receives a repulsive force from the second pole piece 120, and the rotary magnet 150 rotates together with the shaft 160 and the bearing 170 about the center C of the shaft 160.

When the rotary magnet 150 rotates 180 degrees from the first arrangement state (see fig. 1a) and is disposed in the second arrangement state (see fig. 1c), the S-pole of the rotary magnet 150 is adjacent to the first pole piece 110 and magnetically connected to the first pole piece 110, and the N-pole of the rotary magnet 150 is adjacent to the second pole piece 120 and magnetically connected to the second pole piece 120.

When the rotary magnet 150 is rotated and disposed in the second arrangement state (see fig. 1c), the magnetic flow is formed on the first interaction surface 112 and the second interaction surface 122, and the magnetic flow may form the magnetic closed loop together with another magnetic body. That is, the magnetic flow diverges through the first interaction surface 112 or the second interaction surface 122. In this case, the "divergence of the magnetic flow" includes both a case in which the magnetic flow is formed to the outside from the first interaction surface 112 or the second interaction surface 122 and a case in which the magnetic flow is formed from the outside to the first interaction surface 112 or the second interaction surface 122.

Therefore, when the object 1 having magnetism comes into contact with the first interaction surface 112 and the second interaction surface 122, the object 1 forms the magnetic closed loop, as illustrated in fig. 1c, together with the rotary magnet 150, the first pole piece 110, and the second pole piece 120, such that the object 1 is held on the magnetic force control device 100.

In addition, because the stationary magnet 180 may not form the magnetic flow together with the rotary magnet 150 in the state in which the rotary magnet 150 is disposed in the second arrangement state (see fig. 1c), the stationary magnet 180 forms another magnetic closed loop together with the object 1.

Therefore, the rotary magnet 150 forms the magnetic closed loops in the two directions, such that the rotary magnet 150 is kept in a stable state. Therefore, the rotation of the rotary magnet 150 is prevented, such that the holding performance of the magnetic force control device 100, which holds the object 1, may be constantly maintained.

In the state in which the magnetic closed loops are formed as illustrated in fig. 1c, the magnetic closed loops are maintained even though the voltage applied to the coil 190 is eliminated, and as a result, the object 1 remains held.

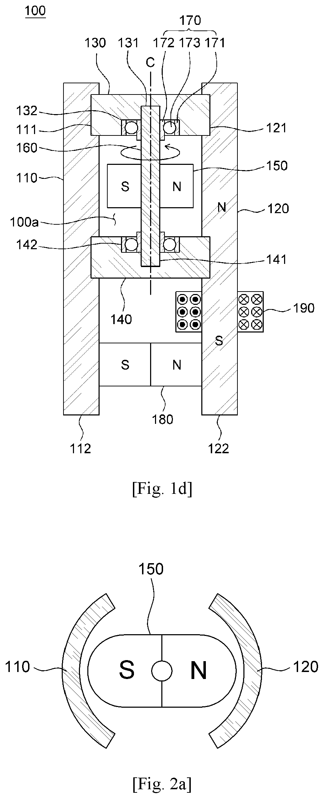

As illustrated in fig. 1d, when the coil 190 is controlled so that the current flows in a direction opposite to the direction of the current illustrated in fig. 1b in the state in which the rotary magnet 150 is disposed in the second arrangement state (see fig. 1c), the rotary magnet 150 rotates together with the shaft 160 and the bearing 170 about the center C of the shaft 160 so as to be disposed in the first arrangement state (see fig. 1a) again, and the rotary magnet 150 forms the magnetic closed loop together with the stationary magnet 180, such that the object 1 may be separated from the magnetic force control device 100.

When the rotary magnet 150 is disposed in the first arrangement state (see fig. 1a) again, an internal circulation magnetic flow is formed, as indicated by the dotted line in fig. 1a, even though no current is applied to the coil 190, and as a result, the object 1 may not be held on the first interaction surface 112 and the second interaction surface 122.

Hereinafter, various exemplary embodiments of the first pole piece 110 and the second pole piece 120 of the present invention will be described.

Figs. 2a to 2c are cross-sectional views illustrating various exemplary embodiments of upper portions of the first and second pole pieces.

With reference to fig. 2a, the first pole piece 110 and the second pole piece 120 may each have an upper shape having a U-shaped cross-section. In this case, the first pole piece 110 and the second pole piece 120 may be reduced in weight, and the magnetic force control device 100 may be reduced in weight.

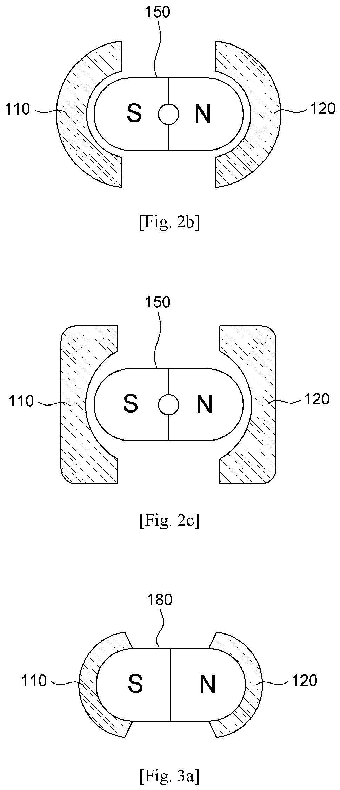

With reference to fig. 2b, the first pole piece 110 and the second pole piece 120 may each have an upper shape having a cross-section larger in thickness than that in fig. 2a. In this case, in comparison with the first and second pole pieces in fig. 2a, the first and second pole pieces 110 and 120 increase in weights, such that the first and second pole pieces 110 and 120 may not be easily damaged by an external impact.

With reference to fig. 2c, the first pole piece 110 and the second pole piece 120 may each have a quadrangular upper shape having rounded corners. In this case, in comparison with the first and second pole pieces in figs. 2a and 2b, the upper portions of the first and second pole pieces 110 and 120 have increased sizes, which may stably protect the diamagnetic bodies 130 and 140, the rotary magnet 150, the shaft 160, and the bearings 170, which are disposed inside the first pole piece 110 and the second pole piece 120, from an external impact.

The first and second pole pieces 110 and 120 in figs. 2a to 2c may each have an inner surface with an arc shape. The inner surface may have a curvature corresponding to a rotation radius of the rotary magnet 150 that rotates about the center of the shaft 160.

Figs. 3a to 3c are cross-sectional views illustrating various exemplary embodiments of lower portions of the first and second pole pieces.

With reference to fig. 3a, the first pole piece 110 and the second pole piece 120 may each have a lower shape having a U-shaped cross-section. In this case, because the inner surface has an arc shape, the stationary magnet 180, which is supported on the lower portions of the first and second pole pieces 110 and 120, may be provided along the shapes of the inner surfaces of the first and second pole piece 110 and 120 so that the stationary magnet 180 may be in contact with the inner surfaces of the first and second pole pieces 110 and 120 and stably supported on the first and second pole pieces 110 and 120.

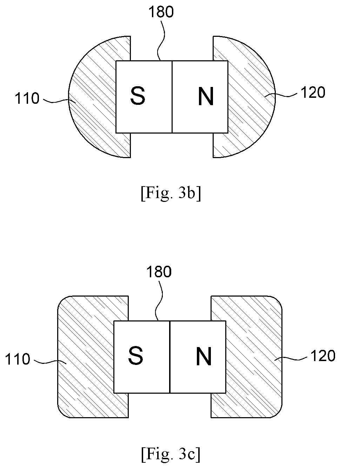

With reference to fig. 3b, the first pole piece 110 and the second pole piece 120 may each have a semicircular lower shape having a cross-section larger in thickness than that in fig. 3a. In this case, the first and second pole pieces 110 and 120 increase in cross-sectional area in comparison with the first and second pole pieces in fig. 3a, such that the first and second pole pieces 110 and 120 may more properly withstand an external impact in comparison with the first and second pole pieces in fig. 3a.

With reference to fig. 3c, the first pole piece 110 and the second pole piece 120 may each have a quadrangular lower shape having rounded corners. In this case, in comparison with the first and second pole pieces in figs. 3a and 3b, the lower portions of the first and second pole pieces 110 and 120 have increased sizes, which may stably protect the stationary magnet 180, which is disposed inside the lower portions of the first and second pole pieces 110 and 120, from an external impact.

The first pole piece 110 and the second pole piece 120 may be provided in the form of a combination of the upper shapes in figs. 2a and 2b and the lower shapes in figs. 3a and 3b. For example, the first pole piece 110 and the second pole piece 120 may each be provided in a shape having the upper shape in fig. 2a and the lower shape in fig. 3b and a shape having the upper shape in fig. 2a and the lower shape in fig. 3c.

In addition, the first pole piece 110 and the second pole piece 120 may each be provided in a shape having the upper shape in fig. 2b and the lower shape in fig. 3a and a shape having the upper shape in fig. 2b and the lower shape in fig. 3c.

In addition, the first pole piece 110 and the second pole piece 120 may each be provided in a shape having the upper shape in fig. 2c and the lower shape in fig. 3a and a shape having the upper shape in fig. 2c and the lower shape in fig. 3b.

In the present exemplary embodiment, the examples have been described in which the first and second pole pieces have a combination of the shapes in figs. 2 to 3. However, the present invention is not limited thereto. The upper and lower portions of each of the first and second pole pieces may have various shapes.

Although the exemplary embodiments of the present invention have been described in detail with reference to the accompanying drawings, the present invention is not limited thereto and may be embodied in many different forms without departing from the technical concept of the present invention. Therefore, the exemplary embodiments disclosed in the present invention are provided for illustrative purposes only but not intended to limit the technical concept of the present invention. The scope of the technical concept of the present invention is not limited thereto. Therefore, it should be understood that the above-described exemplary embodiments are illustrative in all aspects and do not limit the present invention. The protective scope of the present invention should be construed based on the following claims, and all the technical spirit in the equivalent scope thereto should be construed as falling within the scope of the present invention.

## Claims

1. A magnetic force control device comprising:
a first pole piece having a first interaction surface;
a second pole piece having a second interaction surface;
a stationary magnet fixed between the first pole piece and the second pole piece;
a rotary magnet provided between the first pole piece and the second pole piece and configured to be rotatable to define a first arrangement state in which an S-pole of the rotary magnet is magnetically connected to the second pole piece and an N-pole of the rotary magnet is magnetically connected to the first pole piece, and a second arrangement state in which the N-pole of the rotary magnet is magnetically connected to the second pole piece and the S-pole of the rotary magnet is magnetically connected to the first pole piece; and
a coil wound around at least one of the first pole piece and the second pole piece,
wherein a rotation axis of the rotary magnet extends in a direction toward the stationary magnet, and
wherein the first arrangement state and the second arrangement state are switched by rotating the rotary magnet by controlling a current applied to the coil, such that magnetic forces on the first and second interaction surfaces of the first and second pole pieces are controlled.

2. The magnetic force control device of claim 1, comprising:
a shaft disposed between the first pole piece and the second pole piece and configured to rotate together with the rotary magnet.

3. The magnetic force control device of claim 2, comprising:
a plurality of diamagnetic bodies coupled to the first pole piece and the second pole piece and configured to support the shaft.

4. The magnetic force control device of claim 3, wherein the plurality of diamagnetic bodies comprises:
a first diamagnetic body supported on the first pole piece and the second pole piece and configured to accommodate one end of the shaft; and
a second diamagnetic body disposed below the first diamagnetic body and configured to accommodate the other end of the shaft.

5. The magnetic force control device of claim 4, wherein the rotary magnet is disposed between the plurality of diamagnetic bodies.

6. The magnetic force control device of claim 4, comprising:
bearings respectively coupled to the diamagnetic bodies and configured to support a part of the shaft.

7. The magnetic force control device of claim 6, wherein the diamagnetic bodies each include:
a shaft groove configured to support the part of the shaft; and
a bearing groove disposed at one side and the other side of the shaft groove and configured to support the bearing.

8. The magnetic force control device of claim 7, wherein the bearing includes:
an outer race supported on one surface of the bearing groove;
an inner race disposed to be spaced apart from the outer race and coupled to the part of the shaft; and
a plurality of rolling elements disposed between the outer race and the inner race.

9. The magnetic force control device of claim 8, wherein a length of the inner race is longer than a length of the outer race.

10. The magnetic force control device of claim 4, wherein the plurality of diamagnetic bodies is coupled to the first pole piece and the second pole piece and defines an accommodation space.

11. The magnetic force control device of claim 10, wherein a part of the shaft is accommodated in the accommodation space in a state in which the shaft is supported on the plurality of diamagnetic bodies.

12. The magnetic force control device of claim 11, wherein the rotary magnet is rotatable in the accommodation space in a state in which the rotary magnet is coupled to the shaft.

13. The magnetic force control device of claim 9, wherein the rotary magnet is rotatable while being in contact with the inner race in a state in which the rotary magnet is coupled to the shaft.

14. The magnetic force control device of claim 4, wherein the coil is disposed between the second diamagnetic body and the stationary magnet.

15. The magnetic force control device of claim 14, wherein the rotary magnet and the stationary magnet are disposed to be spaced apart from each other with the second diamagnetic body interposed therebetween.

16. The magnetic force control device of claim 1, wherein the coil is disposed between the rotary magnet and the stationary magnet.

17. A magnetic body holding device comprising the magnetic force control device according to any one of claims 1 to 16.
